# EUROPEAN PATENT APPLICATION

(11) **EP 0 529 845 A1**
(43) Date of publication of application: **03.03.1993**
(21) Application number: 92307215.1
(22) Date of filing: 06.08.1992
(51) Int. Cl.: B01D 41/02, B01J 19/10, B01J 20/34, C01B 31/08, B01D 24/28, B01D 24/46, C02F 1/28, B03B 1/00, B09B 3/00

(54) **Device and method for purification of liquids and for cleansing of the filtering material used in the device**

(30) Priority: 27.08.1991 FI 914038
(71) Applicant: EKOKEM OY AB, SF-11100 Riihimäki (FI)
(72) Inventor: Kukkurainen, Hannu, SF-18100 Heinola (FI)
(74) Representative: Clifford, Frederick Alan

(57) **Abstract**

The invention concerns a method for cleansing of a granular material, such as activated carbon, intended for filtering of liquids and for purification of other materials that contain impurities. Ultrasound is applied to the material to be cleansed at the same time as the material is passed through a basin that contains washing fluid, whereby the impurities are separated from the material to be cleansed into the washing solution. The device in accordance with the invention for cleansing of such materials includes a cleansing device (3), which contains washing fluid, a conveyor on which the material to be treated is carried into the cleansing device (3) and passed through the cleansing device, and an ultrasonic device (6), by whose means ultrasound is applied to the material to be treated. The invention further concerns a device for purification of liquids by means of a filtering material as well as for cleansing of the filtering material. The device includes one or several water purification devices (A,B,C,D...) connected as a series, into whose top portion a duct (10a,10b,10c,10d...) passes so as to pass the liquid to be purified into the device (A,B,C,D...), and out of whose bottom part a duct (12a,12b,12c,12d...) passes for removal of the purified liquid out of the device, a duct (4a,4b,4c,4d...) for removal of the filter material out of the top portion of the device (A,B,C,D...), a device (3) in accordance with the invention included in the device for cleansing of the filtering material, and a duct (19) for passing the cleansed filtering material from the device (3) for cleansing of the filtering material into the water purification device (A,B,C,D...) through the duct (19a,19b,19c,19d...).

## Description

Device for purification of liquids and for cleansing of the faltering material used in the device as well as related methods for purification of liquids and for cleansing of the filtering material used for purification of liquids

The invention concerns a method for cleansing of a granular material, such as activated carbon, intended for filtering of liquids and for purification of other materials that contain impurities.

The invention also concerns a device for cleansing of filtering material as well as a device for purification of liquids by means of a filtering material.

Further, the invention concerns the use of the device and the method in accordance with the invention.

In purification of liquids in which the liquids are passed through a filter bed these falters are filled with impurities during the filtration and must either be replaced by new filters or be cleansed by regeneration of the filter bed for reuse.

As a rule, the cleansing of a filter material, for example of a granular filter material, such as activated carbon, takes place by burning in a combustion plant. As a result of this, unfortunately, the pores in the filtering material become larger, and in operation they receive particular colonies of bacteria. In reactivation, new pores are also formed, and in them strains of bacteria also start growing. This latter drawback is a problem especially in the production of clean water.

Most commonly, the service life of activated carbon is one year. After that the carbon must be reactivated, because the surface is blocked and the absorption capacity is at an end.

As a rule, attempts are made to carry out the cleansing of the filter units during operation in order to prevent interruptions in the faltering process. As is known in prior art, the cleansing that takes place during operation is based on backwash. It is a drawback of this method that the filter material is not cleansed completely, the process is time-consuming and requires large quantities of water. Further, to be exact, this cannot be called cleansing that takes place during operation, for during the backwash process itself the filter concerned does not operate as a filter.

In respect of prior art, reference is further made to the Published FI Patent Application No. 79,471, wherein the filter unit is connected with an ultrasonic oscillator and an ultrasonic generator together with a compressed-air flushing valve. This device comprises two identical filter units, which are alternatingly in operation and in the cleansing sequence.

The primary object of the present invention is to provide a novel method and a novel device for purification of liquids as well as for cleansing of the filter material used for the purification which method and device give a better result than the prior-art method and device do.

Thus, the method in accordance with the invention is mainly characterized in that ultrasound is applied to the material to be cleansed at the same time as the material is passed through a basin that contains washing fluid, whereby the impurities are separated from the material to be cleansed and sink to the bottom of the basin.

On the other hand, the device in accordance with the invention is mainly characterized in that it contains a cleansing device, which contains washing fluid, a conveyor on which the material to be treated is carried into the cleansing device and passed through the cleansing device, and an ultrasonic generator, by whose means ultrasound is applied to the material to be treated.

Advantageous embodiments of the invention have characteristics as stated in the subclaims.

Owing to the method and the device in accordance with the invention, the service life of the filtering material, such as activated carbon, is multiplied, for the cleansing result is excellent and the pores do not contain impurities. In the method, the physical configuration of the filtering material remains unchanged, whereby the drawback arising from an increase in the size of the pores, which was above stated to take place in the prior-art methods, is avoided.

In the method, an ultrasonic power of about 10... 30 kHz is employed, depending on the impurities that are supposed to be removed, i.e. organic and inorganic compounds, solvent, humus materials, etc. In the ultrasonic washing line, a temperature of about 50...80°C, preferably 50°C, is used. The temperature and the power are primarily regulated in accordance with the impurities and with the area of the material to be cleansed. The ultrasonic device itself is assembled out of transmitters and generators available on the market. The washing solution that is used is an emulsion of water and oil, among other things out of environmental reasons, preferably an emulsion of water and vegetable oil. The use of water alone may also be contemplated in some cases.

It is a further advantage of the invention that the losses of transfer are eliminated, because the cleansing of the filtering material can be carried out on the site, and the falter-cleansing part can be shifted readily from one water purification device to the other. Further, by means of the invention, it is possible to wash filter systems in which a sand bed is included. In prior art, such a system could not be washed because of sintering of the sand.

Thus, the device in accordance with the invention and intended for cleansing of the filtering material itself can be shifted from one plant to the other and is therefore highly favourable for operation at plants at which cleansing of activated carbon is required occasionally.

Further, the invention is highly favourable to the environment, for the detrimental substances are recovered.

If desired, the method in accordance with the invention is continuous, and no part of the process has to be interrupted for the time of cleansing of the filtering material, which is the case, for example, in the Published FI Pat. Appl. No. 79,471.

In the following, the invention will be described in detail with reference to the figures, which are, however, not supposed to restrict the invention.

Figure 1 illustrates cleansing of filtering material in accordance with the invention.

Figure 2 illustrates cleansing of filtering material in accordance with the invention applied in connection with purification of water.

The water to be treated may be, for example, water from water purification lines, from water discharge lines, waste water from industry or other waste water, water from a dumping tip, or ground water that contains impurities.

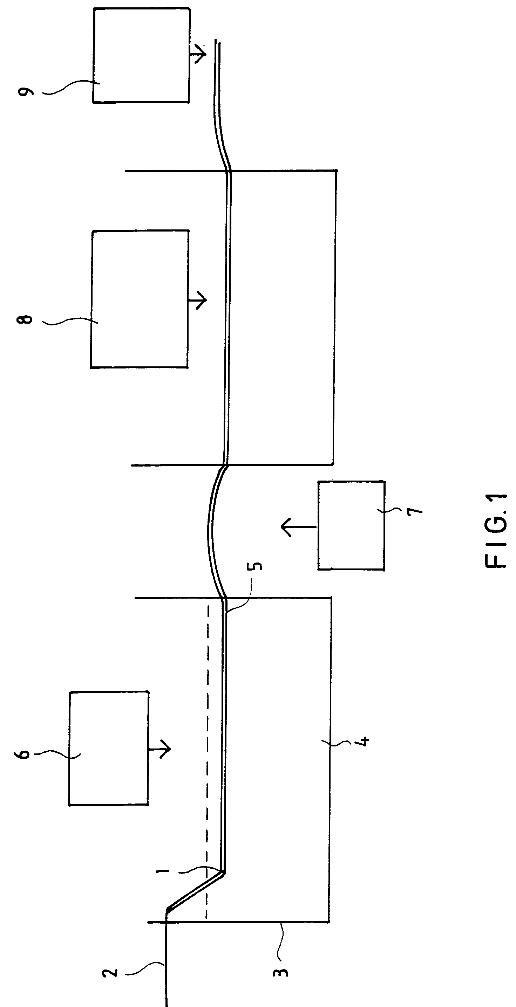

In Fig. 1, material 1 to be cleansed, which is, for example, filtering material, such as activated carbon, zeolite, sand, soil, or equivalent, is fed, preferably by means of an ejector at point 2, into a basin 3, which contains washing solution, preferably an emulsion of water and oil 4. The material 1 to be cleansed passes as a mat on the conveyor 5 while ultrasound is applied to it from an ultrasonic generator 6. Owing to the cavitation by the ultrasound, the impurities are detached from the material 1 to be cleansed into the washing solution 4, and thereupon the material 1, which has now been cleansed, moves further on the conveyor 5, which is, for example, a wire conveyor, out of the container 3. It is also possible to employ different embodiments. The conveyor 5 may be, for example, a pipe, in whose interior the material to be treated runs, in which case, if desired, the device can be made of small size.

After this, the cleansed material 1 can be subjected to finishing treatment in a way in itself known. After it has left the container 3, the material 1 can, for example, be dried by means of a vacuum dryer 7. Thereupon the material is, as a rule, subjected to flushing 8 and to drying by means of an infrared device 9.

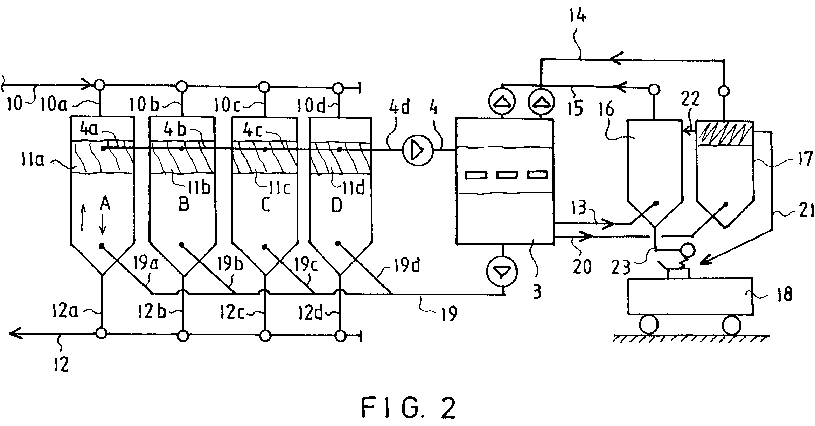

In Fig. 2, the cleansing of the filtering material in accordance with the invention is a part of a continuous water purification process. The supply water to be purified is passed along the duct 10 through the ducts 10a,10b,10c,10d... into one or several water purification devices A,B,C,D... Each water purification devices contains filtering material 11a,11b,11c,11d (not shown with dimensionally correct proportions), which is taken as an overflow along the duct 4 through the ducts 4a,4b,4c,4d to regeneration 3. In the regeneration device 3, the cleansing of the filtering material 1 in accordance with the invention, as shown in Fig. 1, takes place, and the treated filtering material 1 is pumped back into the water purification filters 11a,11b,11c,11d through the bottoms of the filter devices A,B,C,D... along the duct 19 through the ducts 19a, 19b, 19c, 19d... Thus, in the filters 11a,11b,11c,11d, during purification, the water to be purified always meets the purest filtering material last, before, upon purification, the water leaves the filters along the duct 12 through the ducts 12a,12b,12c,12d... In this way, the bed of filtering material rises constantly, and overflow of impure filtering material arrives constantly in regeneration 3. From the regeneration device 3, a duct 13 also passes, along which contaminated washing fluid is passed to desorption 16, in which the impurities are separated from the washing fluid and sink to the bottom. The oil-emulsion washing water free from impurities is removed from desorption and passed back to regeneration along the duct 15. The flushing water needed for the flushing in connection with the ultrasonic cleansing is taken from the bottom part of the tank 17 along the duct 14 and removed from the regeneration along the duct 20. Oil is gathered from the flushing on the surface of the tank 17, from where it is removed as overflow along the duct 21 to recovery 18. Part of the oil passes into the desorption tank along the duct 22. To the recovery 18, impurities are also received from the desorption 16 along the duct 23.

Finally, the result of the cleansing of the filtering material in accordance with the invention is still compared with the result obtained by means of a combustion furnace with the aid of the following photographs, wherein

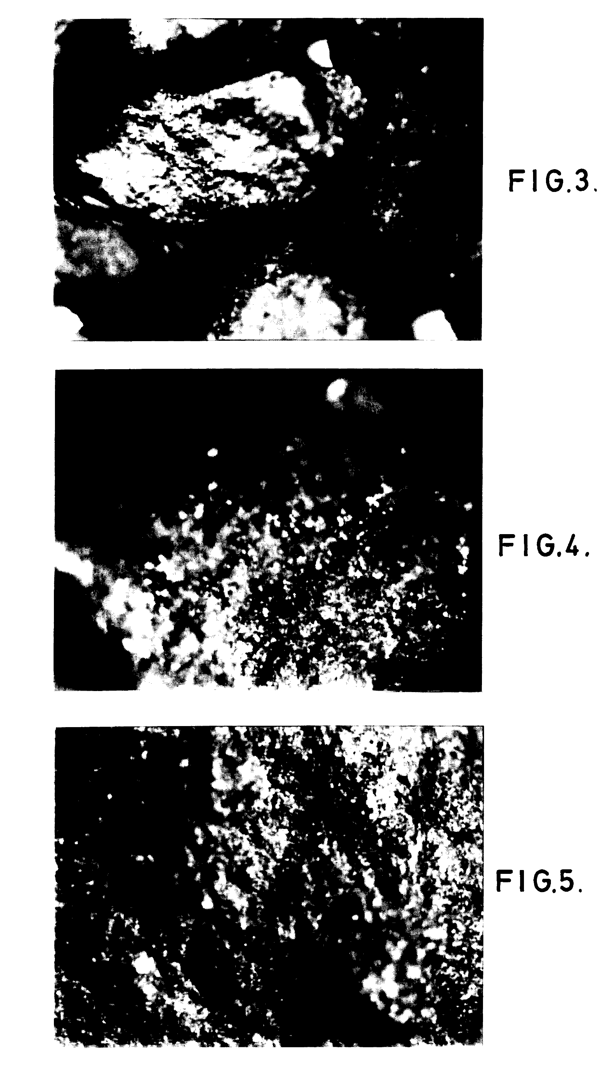

Figure 3 is a photograph of used activated carbon.

Figure 4 is an enlarged view from Fig. 3, wherein the pores are shown as black spots.

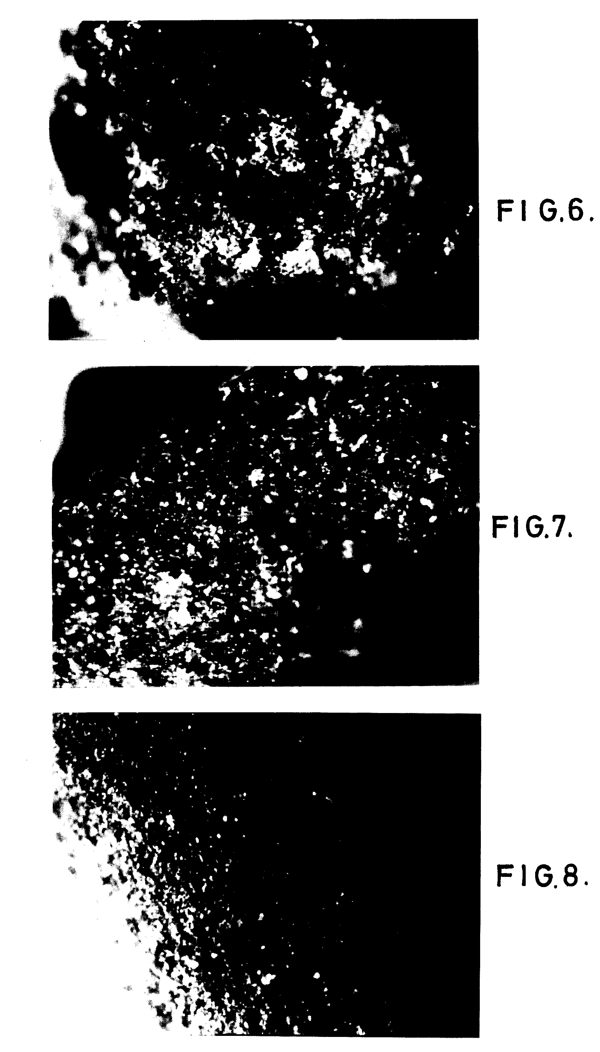

Figure 5 is an enlarged view from Fig. 4, wherein there are also pores shown as black spots.

Figure 6 is a photograph of activated carbon which has been cleansed at a combustion plant and in which the pores are now seen clearly. From Fig. 6 it is seen that the physical configuration of the carbon has been changed, the pores have become larger, and new pores have also been formed. This activated carbon consists of "crater-like" recesses. This is a drawback, for in such enlarged pores colonies of bacteria start growing during filtration.

Figure 7 is an equally enlarged photograph as Fig. 6 of activated carbon that has been regenerated by means of the method of the invention. In this, the physical configuration has not been changed, but the activated carbon substantially resembles

Figure 8, which is a photograph of unused fresh carbon.

In the following, the patent claims will be given, and the details may show variation within the scope of the inventive idea defined in said claims.

## Claims

1. Method for cleansing of a granular material, such as activated carbon, intended for faltering of liquids and for purification of other materials that contain impurities, **characterized** in that ultrasound is applied to the material to be cleansed at the same time as the material is passed through a basin that contains washing fluid, whereby the impurities are separated from the material to be cleansed into the washing solution.

2. Method as claimed in claim 1, **characterized** in that the frequency of the ultrasound is chosen in accordance with the area of the material to be treated and with the nature and the quantity of the impurities in the range of 10...30 kHz.

3. Method as claimed in claim 1 or 2, **characterized** in that the washing solution used is an emulsion of water and oil or water alone.

4. Method as claimed in any of the claims 1 to 3, **characterized** in that the material to be treated is passed on a conveyor, e.g. a wire conveyor, or in a pipe.

5. Method as claimed in any of the claims 1 to 4, **characterized** in that the impurities are recovered.

6. Method as claimed in any of the claims 1 to 5, **characterized** in that the method is used in connection with purification of liquids, wherein the liquid to be purified is passed through the filter material from the top towards the bottom, purified liquid is removed from the bottom, and filtering material is removed for cleansing from the top and passed to the regeneration basin, in which the cleansing in accordance with the claims 1 to 5 takes place, whereupon the contaminated washing water is removed and the cleansed filtering material is again passed to the water purification devices from below.

7. Method as claimed in claim 6, **characterized** in that cleansing of the filtering material is carried out continuously.

8. Method as claimed in claims 6 and 7, **characterized** in that filter material is taken to regeneration as overflow.

9. Use of a method as claimed in any of the claims 1 to 5 for cleansing of zeolite.

10. Use of a method as claimed in any of the claims 1 to 5 for purification of polluted soil.

11. Device for cleansing of a granular material, such as activated carbon, intended for filtering of liquids and for purification of other materials that contain impurities, **characterized** in that it includes a cleansing device (3), which contains washing fluid, a conveyor on which the material to be treated is carried into the cleansing device (3) and passed through the cleansing device, and an ultrasonic device (6), by whose means ultrasound is applied to the material to be treated.

12. Device as claimed in claim 10, **characterized** in that it comprises ducts (13) for removal of the washing fluid from the device and ducts (15) for its introduction into the device.

13. Device as claimed in claim 12, **characterized** in that it comprises a duct (14) for introduction of the flushing agent into the device and a duct (20) for removal of the flushing water out of the device.

14. Device for purification of liquids by means of a filtering material as well as for cleansing of the filtering material in view of carrying out the method as claimed in any of the claims 6 to 8, **characterized** in that the device includes one or several water purification devices (A,B,C,D...) connected as a series, into whose top portion a duct (10a,10b,10c,10d...) passes so as to pass the liquid to be purified into the device (A,B,C,D...), and out of whose bottom part a duct (12a,12b,12c,12d...) passes for removal of the purified liquid out of the device, a duct (4a,4b,4c,4d...) for removal of the filter material out of the top potion of the device (A,B,C,D...), a device (3) included in the device for cleansing of the filtering material, and a duct (19) for passing the cleansed filtering material from the device (3) for cleansing of the filtering material into the water purification device (A,B,C,D...) through the duct (19a,19b,19c,19d...).

15. Device as claimed in claim 14, **characterized** in that a duct (15) passes into the device (3) for cleansing of the filtering material for introduction of the washing fluid into the device (3), a duct (20) passes for removal of the washing fluid from the device (3) and for removal of impurities from the device into the containers (16,17,18) for separation and recovery of impurities.

16. Device as claimed in claim 14 or 15, **characterized** in that the device is connected with a desorption device (16), into which the contaminated washing fluid is passed through the duct (13) and in which the impurities sink to the bottom of the device (16) and are removed through the duct (23), and from which device pure washing fluid is passed to the regeneration (3) along the duct (15).

17. Device as claimed in any of the claims 14 to 16, **characterized** in that the device is connected with a container (17), from which flushing water is passed to the regeneration (3) along the duct (14) and into which the contaminated flushing water is passed along the duct (20), and in which oil is separated from the flushing water on the surface of the device (17), being removed as overflow.
